# EUROPÄISCHE PATENTSCHRIFT

(11) **EP 2 489 412 B1**
(45) Veröffentlichungstag und Bekanntmachung des Hinweises auf die Patenterteilung: **23.07.2014**
(21) Anmeldenummer: 12155438.0
(22) Anmeldetag: 14.02.2012
(51) Int. Cl.: A62C 37/36, A62C 37/44, A62C 37/46, A62C 35/68, F16K 11/065, F16K 31/08, A62C 37/11, A62C 37/40

(54) **Ventil**
Valve
Soupape

(30) Priorität: 17.02.2011 EP 11154772
(43) Veröffentlichungstag der Anmeldung: 22.08.2012
(73) Patentinhaber: Minimax GmbH & Co. KG, 23840 Bad Oldesloe (DE)
(72) Erfinder: Zlatintsis, Chrysafis, 23554 Lübeck (DE)

(56) Entgegenhaltungen:
- DE-U1- 8 619 497
- US-A- 2 374 593

## Beschreibung

Die Erfindung betrifft ein Ventil für die Steuerung eines druckbeaufschlagten fluiden Mediums nach den Merkmalen des Oberbegriffes des ersten Patentanspruches.

Unter fluiden Medien werden Flüssigkeiten und Gase verstanden.

Das Ventil ist in Anlagen und Vorrichtungen anwendbar, wo es in einem ersten Schaltzustand den Fluss des Mediums verhindert, d.h. z.B. Öffnungen in Behältern, oder Volumensegmenten, oder Rohrleitungen verschließt. Im Bedarfsfall wird ein zweiter Schaltzustand durch eine elektrische Spannung oder ein Spannungssignal erzeugt und das Ventil geöffnet und der Fluss des fluiden Mediums freigegeben. Für die Aufrechterhaltung beider Schaltzustände ist keine externe Fremdenergie aus Batterien, Akkumulatoren oder anderen externen Spannungsversorgungen notwendig.

Die Erfindung ist überall dort anwendbar, wo fluide Medien vorhanden sind wie in der Lebensmittel-, chemischen und petro-chemischen Industrie, der Trink- und Betriebswasserversorgung und anderen Industriebereichen.

In einer vorteilhaften Ausführung ist das fluide Medium ein Löschmittel, z.B. Wasser, ein Wasser-Schaumgemisch, ein Gas oder ein chemisches Löschmittel. Da einige Löschmittel auch eine abkühlende Wirkung haben, wird im Weiteren unter dem Begriff Löschmittel auch ein Kühlmittel verstanden.

Das Ventil ist in Löschanlagen und Löschvorrichtungen dort anwendbar, wo Druckbehälter, Baugruppen, Rohre oder Volumensegmente mit Lösch- oder Kühlmitteln durch ein Ventil verschlossen werden und im Bedarfsfall, z.B. bei der Detektion eines Brandes, durch eine elektrische Spannung oder ein Spannungssignal das Ventil geöffnet wird und den Löschmittelfluss freigibt.

EP 0 824 027 A1 beschreibt eine Explosionsschutzvorrichtung mit elektrischer Auslösung, wobei die Auslöseeinrichtung mit einer Feder und einem Elektromagneten betrieben wird. Der Elektromagnet wird permanent mit Strom versorgt. Sobald die Stromversorgung für den Elektromagneten ausfällt, entspannt sich die Feder, so daß eine Verriegelungsvorrichtung zurückgezogen wird, die auf einen weiteren

Mechanismus wirkt. Die Vorrichtung funktioniert nicht energieunabhängig und ist auch nicht geeignet, an einer Löschvorrichtung angeordnet zu sein.

DE 199 45 856 B4 beschreibt eine Sprinklervorrichtung mit einem Ventil, das bei vorgegebenen Kriterien öffnet, wobei dieses Ventil durch einen Sensor angesteuert wird, der schnell auf Parameter anspricht, die bei einem Feuer entstehen, wobei mehrere Sensoren vorgesehen sind, die mittels eines Auswertealgorithmus das Ventil ansteuern und die Sensoren auf verschiedene Parameter des Feuers ansprechen können. In einer besonderen Ausführungsvariante beschreibt das Dokument ein Glasröhrchen, an dem ein piezoelektrisches Verhalten zum Auslösen eines Alarms genutzt wird. Die Stromversorgung kann mittels elektrischer Leitung und Batterie erfolgen.

Nachteilig an diesem Stand der Technik ist, dass Ventile in bestehenden Anlagen der obengenannten Anwendungsgebiete, z. B. Löschvorrichtungen üblicherweise über Magnetventile oder anderer Ansteuervorrichtungen angesteuert werden, was eine Energiebevorratung über Batterien oder eine Spannungsversorgung über Kabel voraussetzt.

Bekannte Magnetventile zur Steuerung von fluiden Medien, z.B. für Löschmedien benötigen für den Bereitschaftszustand und/oder für den Auslösezustand eine ständige Spannungsversorgung. Gerade im Katastrophen- oder Brandfall können Energieversorgungsstellen zerstört werden, die für die Strom- und Spannungsversorgung für Ansteuerungzwecke von Ventilen vorgesehen sind. In diesem Fall versagen Ventile, die für die Aufrechterhaltung von Betriebs- und/oder Auslösezustand eine dauerhafte Spannungsversorgung benötigen. Beispiele für Magnetventile werden in DE 8619497 und US2374593 beschrieben.

Weiterhin haben bekannte Magnetventile den Nachteil, dass sie für bestimmte Druckstufen eine definierte minimale elektrische Leistung benötigen um den Auslösezustand zu erreichen.

Andere bekannte Systeme werden über montage- und materialaufwendige bespannte Seilzüge oder hydraulisch/pneumatische Anregerleitungen angesteuert.

Es ist daher Aufgabe der Erfindung, ein Ventil zu entwickeln, für welches keine externe Fremdenergie wie z.B. Batterien, Akkumulatoren oder andere externe Spannungsversorgung zur Aufrechterhaltung des Bereitschafts- und des Auslösezustandes notwendig ist, wobei die elektrische Leistung für den Schaltvorgang zur Erreichung des Auslösezustandes unabhängig vom Druck des anliegenden fluiden Mediums sein soll.

Diese Aufgabe wird durch ein Ventil nach den Merkmalen des ersten Patentanspruches gelöst.

Unteransprüche geben vorteilhafte Ausgestaltungen der Erfindung wieder.

Die erfindungsgemäße Lösung betrifft ein Ventil für die Steuerung eines druckbeaufschlagten fluiden Mediums, bestehend aus dem Gehäuse mit dem Medieneintrittsstutzen und dem Medienaustrittsstutzen, wobei Eintritts- und Austrittsstutzen miteinander verbunden sind. Erfindungsgemäß hält ein elektrisch deaktivierbarer Permanentmagnet das Ventil durch einen Doppelkolben gegen die Kraft einer Feder im Bereitschaftszustand so lange geschlossen, bis ein elektrisches Signal den Permanentmagnet deaktiviert. Unter Deaktivierung wird die Aufhebung des Magnetfelds des Permanentmagneten oder dessen Abschwächung verstanden, so dass am Permanentmagnet haftende Teile freigegeben werden.

Im Weiteren wird der Begriff Bereitschaftszustand für die Stellung des Ventils verwendet, die den Fluss des fluiden Mediums verhindert, d. h, einen Behälter oder ein Rohrsegment oder ein beliebiges Volumensegment verschließt.

Unter Auslösezustand wird die Ventilstellung verstanden die den Fluss des fluiden Mediums freigibt, z.B. einen Druckbehälter öffnet oder einen Durchfluss in einem Volumensegment einer Vorrichtung oder in einer Rohrleitung freigibt.

Der elektrisch deaktivierbare Permanentmagnet ist in vorteilhafter Weise in einem separaten abnehmbaren Gehäuse angeordnet, er kann aber auch im Ventilgehäuse angeordnet sein.

Die Kolbenstange des Doppelkolbenventils kann magnetisierbar sein. Es ist auch möglich, dass zwischen Doppelkolben und Elektropermanentmagnet eine magnetisierbare Scheibe oder ein anderes magnetisierbares bzw. magnetisches Element angeordnet ist, welches am Permanentmagneten haften kann.

Es kann weiterhin vorteilhaft sein, dass der elektrisch deaktivierbare Permanentmagnet mittels Kabel mit einem Melder oder einer Ansteuerungsvorrichtung verbunden ist.

Darüber hinaus kann es vorteilhaft sein, dass die Kolben des Doppelkolbens gleich dimensioniert sind, so dass das Ventil eine druck- und kräfteneutrale Ventilsperre darstellt, auf das das druckbelastete fluide Medium wirkt. Mit gleicher Dimensionierung ist gemeint, dass die Flächen der Kolben, auf die der Betriebsdruck des fluiden Mediums wirkt, die gleiche Größe haben, und damit durch den physikalische Zusammenhang zwischen Druck und Fläche, sich die Kräfte im Doppelkolbenraum auf die Kolben aufheben.

Weiterhin ist es vorteilhaft, dass in der Kolbenstange des Doppelkolbens eine Längsbohrung zum Abbau von Leckagedruck angeordnet ist.

Weiterhin ist es vorteilhaft, wenn die elektrische Spannung oder das Spannungssignal zum Auslösen des elektrisch deaktivierbaren Permanentmagneten durch einen fremdenergieautarken Melder, eine Ansteuerungsvorrichtung oder eine Brandmelder-und/oder Löschsteuerzentrale erfolgt.

Das Ventil besteht aus einem Doppelkolben mit der Kolbenstange und der Betätigungsrichtung, wobei es sich bei dem Ventil um ein Impulsventil handeln kann, welches mit dem elektrisch deaktivierbaren Permanentmagneten ausgestattet ist, der über ein Kabel mit einer Auslösevorrichtung verbunden und über dieses auslösbar ist. Die Zufuhr des fluiden Mediums wie ein Gas, eine Flüssigkeit oder ein Löschmittel kann über eine Leitung oder/und aus einem Vorratsbehälter wie einem Löschmittelvorratsbehälter erfolgen. Der Vorratsbehälter, beispielsweise der Löschmittelvorratsbehälter, ist druckaufgeladen.

Das Ventil in der Zufuhr des fluiden Mediums wie einem Löschmittel, in löschmittelführenden Komponenten oder auf einem druckaufgeladenen Löschmittelvorratsbehälter weist einen Doppelkolben auf, der über eine Feder vorgespannt ist. Feder und Doppelkolben befinden sich in einem Gehäuse mit Löschmitteleintritts- und -austrittsöffnungen, die mit einem Kanal verbunden sind. Zur Erzeugung der Schaltzustände des Ventils sind ein Permanentmagnet und eine Spule angeordnet. Diese Komponenten bilden einen elektrisch deaktivierbaren Permanentmagneten mit elektrischen Anschlüssen zum Anlegen einer Spannung.

Der elektrisch deaktivierbare Permanentmagnet ist im Ventilgehäuse angeordnet, wobei der Doppelkolben im Bereitschaftszustand, d. h. in geschlossener Stellung, am elektrisch deaktivierbaren Permanentmagneten haftet. In einer weiteren vorteilhaften Ausführung befindet sich der elektrisch deaktivierbare Permanentmagnet in einem vom Ventilgehäuse abnehmbaren Gehäuse. Dazu besteht zwischen dem Ventilgehäuse und dem Gehäuse mit dem Permanentmagneten eine Verbindung wie Bajonett-, eine Schraub- oder eine andere dem Fachmann bekannte Verbindung.

Vorteilhafterweise ist zwischen dem Kolben und dem Elektropermanentmagneten eine Scheibe aus magnetisierbarem Material, z. B. eine Stahlscheibe, angeordnet. Weiterhin kann ein Sicherungsring vorhanden sein. Darüber hinaus ist es vorteilhaft, im Gehäuse ein Rückschlagventil, eine Dichtung und den Anschluss für eine Druckanzeige bzw. eine Druckanzeige anzuordnen.

Einer der Doppelkolben ist im Bereitschaftszustand im Ventilkörper zwischen der Löschmitteleintritts- und der Löschmittelaustrittsöffnung angeordnet und sperrt einen Verbindungskanal zwischen diesen. Im Auslösezustand wird das Magnetfeld des Permanentmagneten aufgehoben oder abgeschwächt. Dadurch wird die direkt am Permanentmagnet haftende Kolbenstange oder die Haftung des Kolbens über eine magnetische Scheibe oder ein anderes magnetisches bzw. magnetisierbares Element freigegeben. Dieser Kolben wird durch die sich entspannende Feder so verschoben, dass der Verbindungskanal frei wird und das fluide Medium wie ein Gas oder eine Flüssigkeit wie ein Löschmittel zur Austrittsöffnung des Ventils fließen kann.

Der Auslösezustand wird über das Anlegen einer Spannung, eines Spannungsimpulses oder eines Spannungssignals an eine Spule zur Entmagnetisierung des Permanentmagneten erreicht.

Die Spannung oder das Spannungssignal zur Ansteuerung bzw. Auslösung des Ventils kann von einer Ansteuervorrichtung kommen, die im Bedarfsfall dieses Spannungssignal erzeugt, oder von einem Sensor oder einem Melder. Für den Anwendungsbereich in Löschvorrichtungen und Löschanlagen ist es vorteilhaft dieses Spannungssignal von Brandmeldern, oder von Brandmelder- und/oder Löschsteuerzentralen oder von einer anderen geeigneten Vorrichtung zur Verfügung zu stellen.

Die Spannung, ein Strom oder das Spannungssignal können durch die Zustandsänderung thermischer Auslöseelemente erzeugt werden und die über das Kabel zum Permanentmagneten geleitet werden, wodurch die Haftkräfte des Magneten aufgehoben werden und der Doppelkolben durch die Federkraft bewegt wird. Dadurch wird das Ventil geöffnet und das unter Druck stehende flüssige Medium wie ein Löschmittel wird über das Ventil und über die Leitungen zu mindestens einer Löschdüse und damit zum Brandherd gefördert.

Das erfindungsgemäße Ventil hat den Vorteil, dass für die Aufrechterhaltung des Bereitschaftszustand und des Auslösezustandes keine externe Fremdenergie wie z.B. Batterien, Akkumulatoren oder andere externe Spannungsversorgung notwendig sind, der Auslösezustand über die Entmagnetisierung eines Permanentmagnetes durch Anlegen einer Spannung erreicht wird, wodurch ein zuverlässiges, preiswertes und wenig materialaufwendiges Ventil zur Verfügung steht.

Ein weiterer Vorteil des erfindungsgemäßen Ventils besteht darin, dass es für einen beliebig großen Druckbereich des anliegenden fluiden Mediums verwendet werden kann. Der Druckbereich wird alleine durch die Druckfestigkeit des Ventilaufbaus und des Ventilgehäuses begrenzt. Der Betriebsdruck des fluiden Mediums und dessen Kraftwirkung haben keinen Einfluss auf die Dimensionierung des Ventilverschlusses (Kolben) und die Stärke der notwendigen Ansteuerungskraft. Eine Zu- oder Abnahme des Betriebsdrucks hat keine Auswirkungen auf die Stellung des Ventils. Der Betriebsdruck des fluiden Mediums wirkt in diesem Ventil nur im Doppelkolbenraum, der Druckkammer, welche durch zwei miteinander gekoppelte gleiche Kolben gebildet wird. Die Kräfte des Betriebsdruckes auf die gleich dimensionierten Kolben heben sich auf und das Ventil kann bei beliebigem Druckanstieg und ohne Kraftaufwand in der geschlossenen Stellung bleiben. Die elektrische Leistung für den Schaltvorgang zum Erreichen des Auslösezustand ist somit unabhängig vom Druck des anliegenden fluiden Mediums.

Im Folgenden soll die Erfindung an einem Ausführungsbeispiel und vier Figuren näher erläutert werden. Die Figuren zeigen:
- Figur 1:: Schematische Darstellung des erfindungsgemäßen Ventils
- Figur 2:: Schematische Darstellung des Ventils an einer Löschvorrichtung mit einem fremdenergieunabhängigen Melder.
- Figur 3:: Darstellung der Ventilauslösung über eine Ansteuerungsvorrichtung
- Figur 4:: Schematische Darstellung des Ventils zur Löschmittelfreigabe und Verteilung aus einem Löschmitteltank
- Figur 5:: Schematische Darstellung des Ventils in der Leitung für den Transport des fluiden Mediums.

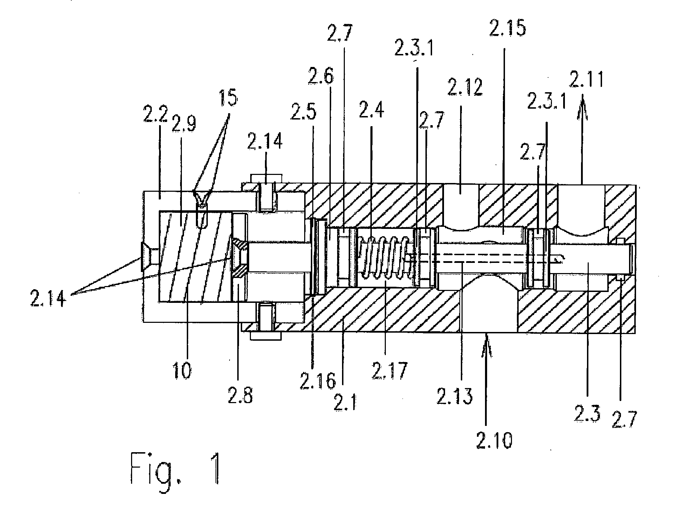

*Figur 1* zeigt das erfindungsgemäße Ventil 2, bestehend aus dem Gehäuse 2.1 mit einem Doppelkolben bestehend aus zwei Kolben 2.3.1 auf einer Kolbenstange 2.3, einer Führungsbuchse 2.6 für die Kolbenstange 2.3 und dem Sicherungsring 2.5 geführt in einer Nut 2.16. Mittels Druckfeder 2.4 ist ein Kolben 2.3.1 des Doppelkolbens gegen die Buchse 2.6 spannbar. Die Scheibe 2.8 aus magnetischem Material kann mit dem Kolben bzw. der Kolbenstange 2.3 fest verbunden sein. Der Permanentmagnet 2.9 ist von einer Spule 10 umgeben mit elektrischen Anschlüssen 15 zum Anlegen eines Spannungssignals zur Entmagnetisierung des Permanentmagneten 2.9. Weiterhin sind der Medieneintrittsstutzen 2.10, der Medienaustrittsstutzen 2.11 und ein oder mehrere Anschlüsse für Druckanzeigen 2.12 im Gehäuse 2.1 angeordnet.

Der Doppelkolben mit der der Kolbenstange 2.3 wird in betriebsbereiter (geschlossener) Stellung mit einem seiner Kolben 2.3.1 gegen die Kraft der gespannten Feder 2.4 vom Permanentmagneten 2.9 gehalten. Der Doppelkolben haftet über das magnetische Element 2.8 am Permanentmagneten 2.9. In der gespannten Stellung bilden die Kolben 2.3.1 einen gesperrten Druckraum 2.15, der mit Medieneintrittstutzen 2.10 und den Anschlüssen für die Druckanzeigen 2.12 kommuniziert.

Die Kolben 2.3.1 sind gleich dimensioniert, damit sich bei beliebigen Drücken in der Druckkammer 2.15 die auf die Doppelkolben wirkenden Kräfte aufheben. Dadurch bleiben die Kolben 2.3.1 bei beliebigem Druckanstieg ohne Kraftaufwand in geschlossener Stellung und in einem statischen Zustand. Mit gleicher Dimensionierung der Kolben 2.3.1 ist gemeint, dass die Flächen der Kolben in der Druckkammer 2.15, auf die der Betriebsdruck des fluiden Mediums wirkt, die gleiche Größe haben bzw. annähernd die gleiche Größe, und damit durch den physikalische Zusammenhang zwischen Druck und Fläche, sich die Kräfte auf die beiden Kolben 2.3.1 in der Druckkammer 2.15 aufheben.

Die Kolben 2.3.1 und die Führungsbuchse 2.6 sind gegen das Gehäuse 2.1 mit Dichtungen 2.7 abgedichtet.

Das Magnetgehäuse 2.2 mit dem Permanentmagneten 2.9 und der Spule 10 ist mit Schrauben 2.14 mit dem Gehäuse 2.1 des Ventils verbunden. Alternativ sind andere, nicht dargestellte Befestigungen verwendbar oder der Permanentmagnet 2.9, die Spule 10 und die Anschlüsse 15 sind direkt im Gehäuse 2.1 des Ventils angeordnet.

Eine Bohrung 2.13 in der Kolbenstange 2.3 verbindet den Federraum 2.17 und den Mediumaustrittsstutzen 2.11. Damit können diese Volumina kommunizieren. Durch die Bohrung 2.13 kann ein Leckagedruck (Druckaufbau) im Federraum 2.17, entstanden durch Leckage an der Dichtung 2.7 des Kolbens 2.3.1, in den offenen Löschmittelaustrittsstutzen 2.11 abgebaut und dadurch eine Fehlbetätigung des Ventils 2 verhindert werden.

Durch das Anlegen einer elektrischen Spannung oder eines Spannungssignals an die Anschlüsse 15 der Spule 10 wird ein magnetisches Gegenfeld gebildet, welches das Magnetfeld des Permanentmagneten 2.9 aufhebt und die anhaftende Kolbenstange 2.3 des Doppelkolbens mit der magnetischen Scheibe 2.8 frei gibt. Dadurch wird der Doppelkolben durch die gespannte Feder 2.4 in die geöffnete Ventilstellung bewegt.

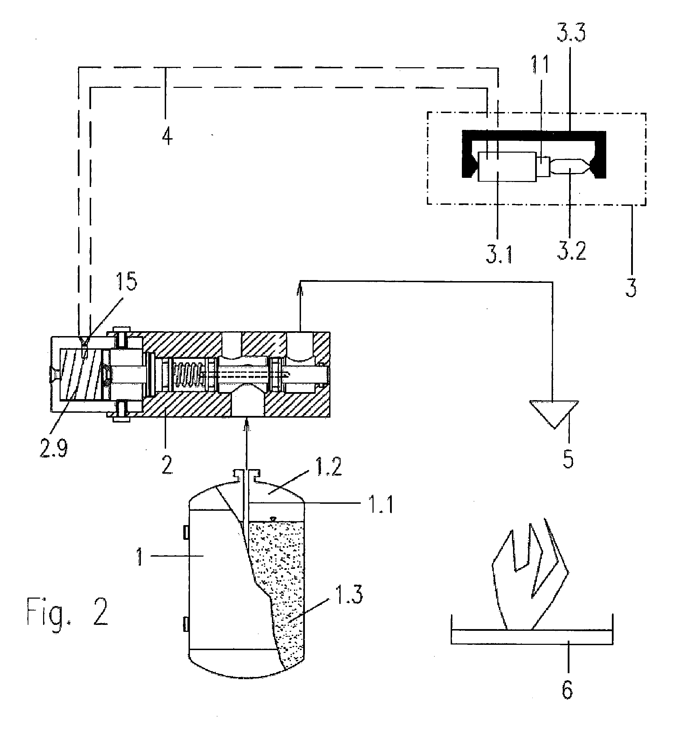

Die *Figur* 2 zeigt das erfindungsgemäße Ventil 2 an einer Löschvorrichtung. Der Piezo-Brandmelder 3 ist über dem Schutzobjekt 6 positioniert, um bei einer definierten Temperatur einen Signalisierungs-, Steuer- oder Schaltvorgang zu ermöglichen.

Das Kabel 4 verbindet die Anschlüsse 15 des Piezoelementes 3.1 bzw. des Melders 3 mit den Anschlüssen des elektrisch auslösbaren Ventils 2. Das Ventil 2 verschließt die Öffnung des Löschmittelbehälters 1, in dem sich das Treibgas 1.2 und des Löschmittel 1.3 befinden. Das Steigrohr 1.1 dient zum Austragen des Löschmittels 1.3 über das Ventil 2 zu der Löschdüse 5 über dem Schutzobjekt 6. Die Aktivierung des Ventils 2, erfolgt im Brandfall über das thermische Auslöseelement 3.2.

Der Melder 3, bestehend aus einem Piezoelement 3.1, dem thermischen Auslöseelement 3.2 und dem Koppelelement 11 sowie der Halterung oder Gehäuse 3.3. Das thermische Auslöseelement 3.2 stellt eine Sprinklerampulle oder ein Schmelzlot dar. Bei erreichen einer definierten Temperatur kommt es zu einer Zustandsänderung des thermischen Auslöseelementes 3.2, es birst die Sprinklerampulle oder schmilzt das Schmelzlot.

Die Anordnung des thermischen Auslöseelementes 3.2, des Koppelelementes 11 und des Piezoelements 3.1 im Gehäuse/Halterung 3.3 ist so ausgelegt, dass durch die Zustandsänderung des thermischen Auslöseelements 3.2 bei einer definierten Temperatur über das Koppelelement 11 eine Kraft bzw. ein mechanischer Druck auf das eine Piezoelement 3.1 ausgeübt und über den Piezoeffekt ein Spannungssignal erzeugt wird.

Das so erzeugte Spannungssignal wird über das Kabel 4 zum Elektropermanentmagneten 2.9 geleitet. Die kurzzeitig anliegende Spannung genügt, um das Magnetfeld des Permanentmagneten 2.9 bzw. seine Haftkraft aufzuheben. Der Doppelkolben wird freigegeben und durch die Federkraft der Druckfeder in die geöffnete Ventilstellung bewegt. Das unter Permanentdruck eines Treibgases 1.2 stehende Löschmittel 1.3 wird über ein Steigrohr 1.1 zu den Löschdüsen 5 und damit zum Brandherd befördert, wodurch der Brand gelöscht wird.

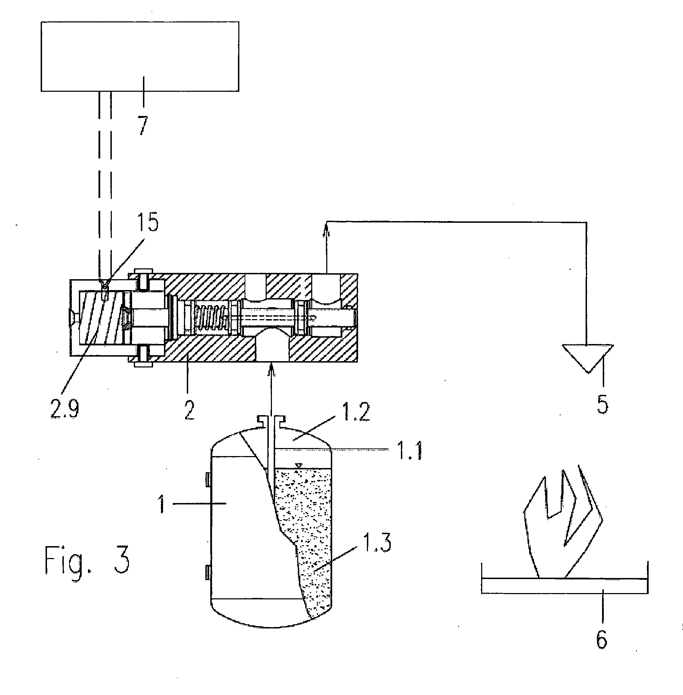

Die *Figur* 3 zeigt ein Ventil 2 mit einer Ansteuerungsvorrichtung 7. Im vorliegenden Fall ist die Ansteuerungsvorrichtung 7 eine Brandmelder- und/oder Löschsteuerzentrale. Diese erhält im Brandfall über angeschlossene Brandmelder ein Brandalarmsignal und erzeugt ein Spannungssignal, welches durch eine elektrische Verbindung zu den Anschlüssen 15 des entmagnetisierbaren Permanentmagneten 2.9 geleitet wird. Das Ventil 2 wird über die Verbindung zur Brandmelder- und/oder Löschsteuerzentrale in den Auslösezustand versetzt und gibt das Löschmittel 1.3 aus dem druckbeaufschlagten Löschmittelbehälter 1 über die Düse 5 frei. Der Löschvorgang am Schutzobjekt 6 wird eingeleitet.

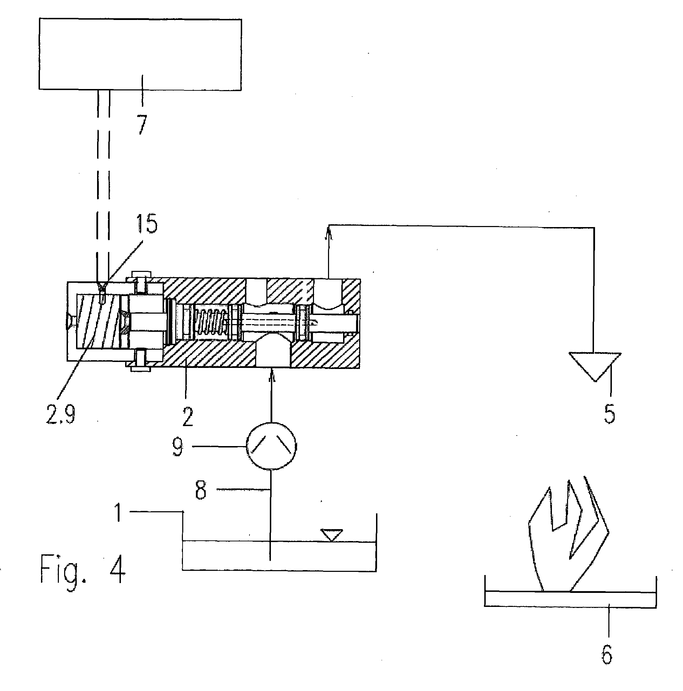

Die *Figur 4* zeigt in schematischer Darstellung die Ansteuerung des Ventils 2 mit einer Ansteuerungsvorrichtung 7 und die Freigabe des Löschmittels aus einem offenen Löschmittelbehälter 1. Zwischen dem Löschmittelbehälter 1 und dem Ventil 2 sind eine Löschleitung 8 und eine Pumpe 9 angeordnet. Vorteilhaft ist die Anordnung mehrerer Löschleitungen 8, bzw. die Verzweigung der Löschleitung 8 nach der Pumpe 9 in einzelne Löschleitungsstränge für mehrere Löschbereiche, wobei pro Löschleitungsstrang und Löschbereich ein Ventil 2 mit Löschmittelleitung am Medienaustrittsstutzen und mindestens einer Düse 5 pro Löschbereich angeordnet sind. In der dargestellten Ausführung ist die Ansteuerungsvorrichtung 7 eine Brandmelder-und/oder Löschsteuerzentrale. Diese erhält im Brandfall über die angeschlossenen Brandmelder ein Brandalarmsignal und erzeugt ein Spannungssignal, welches dann durch eine elektrische Verbindung zu den Anschlüssen 15 des entmagnetisierbaren Permanentmagneten 2.9 der Ventile 2 geleitet wird.

Auch die Pumpe 9 kann von der Ansteuerungsvorrichtung 7 angesteuert werden (nicht dargestellt).

Nach Ansteuerung der Pumpe 9 liegt am Mediumeintrittsstutzen der Ventile 2 das unter Druck stehende Löschmittel an. Selektiv können nun ein oder mehrere Ventile 2 von der Ansteuerungsvorrichtung 7 in den Auslösezustand versetzt werden und das Löschmittel über die Düsen 5 in den angesteuerten Löschbereichen freigegeben werden.

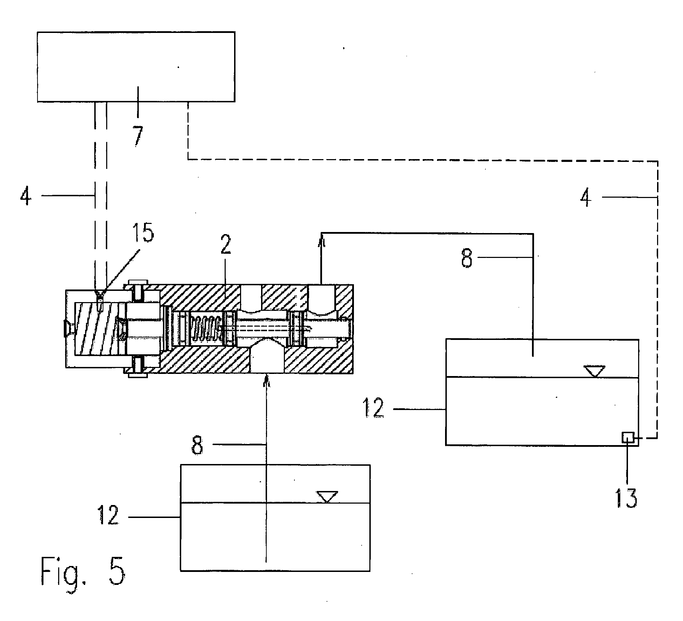

Die *Figur 5* zeigt das Ventil 2 in einer Leitung 8 für den Transport eines fluiden Mediums von einem druckbeaufschlagten Vorratsbehälter 12 in einen anderen Vorratsbehälter 12. Für den Fall, dass ein Vorratsbehälter 12 leer wird, soll der weitere Vorratsbehälter 12 gefüllt werden.

Durch einen Sensor 13 wird festgestellt, dass der eine Vorratsbehälter 12 leer ist, worauf die Ansteuerungsvorrichtung 7 ein elektrisches Spanungssignal an die Anschlüsse 15 zur Deaktivierung des Permanentmagneten 2.9 des Ventils 2 gibt und dieses öffnet, so dass das druckbeaufschlagte fluide Medium von dem einen Vorratsbehälter 12 in den anderen Vorratsbehälter 12 strömen kann.

### Liste der verwendeten Bezugszeichen

- 1: Löschmittelvorratsbehälter
- 1.1: Steigrohr
- 1.2: Treibgas
- 1.3: Löschmittel
- 2: Ventil
- 2.1: Gehäuse
- 2.2: Magnetgehäuse
- 2.3: Kolbenstange
- 2.3.1: Kolben
- 2.4: Druckfeder
- 2.5: Sicherungsring
- 2.6: Führungsbuchse
- 2.7: Dichtung
- 2.8: Stahlscheibe
- 2.9: Permanentmagnet
- 2.10: Medieneintrittsstutzen
- 2.11: Medienaustrittstutzen
- 2.12: Anschluss für Druckanzeige
- 2.13: Bohrung
- 2.14: Schrauben
- 2.15: Druckkammer
- 2.16: Nut
- 2.17: Federraum
- 3: Piezo-Brandmelder
- 3.1: Piezoelement
- 3.2: thermisches Auslöseelement
- 3.3: Halter / Gehäuse
- 4: Kabel
- 5: Düse
- 6: Schutzobjekt
- 7: Ansteuerungsvorrichtung
- 8: Leitung
- 9: Pumpe
- 10: Spule
- 12: Vorratsbehälter
- 13: Sensor
- 15: Elektrische Anschlüsse für die Deaktivierung des Permanentmagneten

## Patentansprüche

1. Ventil für die Steuerung eines druckbeaufschlagten fluiden Mediums, umfassend ein Gehäuse (2.1) mit einem Medieneintrittsstutzen (2.10) und einem Medienaustrittsstutzen (2.11), wobei Eintritts- und Austrittsstutzen (2.10, 2.11) miteinander verbunden sind, **dadurch gekennzeichnet, dass**
ein elektrisch deaktivierbarer Permanentmagnet (2.9) das Ventil (2) durch einen Doppelkolben mit einer Kolbenstange (2.3) gegen die Kraft einer Feder (2.4) im Bereitschaftszustand so lange geschlossen hält, bis ein elektrisches Signal den Permanentmagneten (2.9) deaktiviert,
wobei der Doppelkolben im Bereitschaftszustand, am elektrisch deaktivierbaren Permanentmagneten (2.9) haftet.

2. Ventil nach Anspruch 1, **dadurch gekennzeichnet, dass** der elektrisch deaktivierbare Permanentmagnet (2.9) in einem separaten abnehmbaren Gehäuse (2.2) angeordnet ist.

3. Ventil nach Anspruch 1 oder 2, **dadurch gekennzeichnet, dass** die Kolbenstange (2.3) des Doppelkolbens magnetisierbar ist oder zwischen Kolbenstange (2.3) und dem Permanentmagneten (2.9) eine magnetisierbare Scheibe (2.8) oder ein anderes magnetisierbares Element angeordnet ist.

4. Ventil nach einem der Ansprüche 1 bis 3, **dadurch gekennzeichnet, dass** der elektrisch deaktivierbare Permanentmagnet (2.9) mittels Kabel (4) mit einem Melder (3) oder einer Ansteuerungsvorrichtung (7) verbunden ist.

5. Ventil nach Anspruch 4, **dadurch gekennzeichnet, dass** der Melder einen fremdenergieautarken Melder (3), die Ansteuerungsvorrichtung (7) eine Brandmelder- und/oder Löschsteuerzentrale darstellen.

6. Ventil nach einem der Ansprüche 1 bis 5, **dadurch gekennzeichnet, dass** die Kolben (2.3.1) des Doppelkolbens gleich dimensioniert sind, so dass das sich die Kräfte auf die Kolben 2.3.1. durch den Betriebsdruck des fluiden Mediums in einer Druckkammer 2.15 aufheben.

7. Ventil nach einem der Ansprüche 1 bis 6, **dadurch gekennzeichnet, dass** in der Kolbenstange (2.3) des Doppelkolben eine Längsbohrung (2.13) zum Abbau von Leckagedruck angeordnet ist.

## Claims

1. A valve for control of a pressurized fluid medium, comprising a housing (2.1) with a medium inlet port (2.10) and a medium outlet port (2.11), the inlet and outlet ports (2.10, 2.11) being connected to each other, **characterized in that** an electrically deactivatable permanent magnet (2.9) keeps the valve (2) closed in a standby state against the force of a spring (2.4) by means of a double piston with a piston rod (2.3) until an electric signal deactivates the permanent magnet (2.9), the double piston, in the standby state, adhering to the electrically deactivatable permanent magnet (2.9).

2. The valve according to claim 1, **characterized in that** the electrically deactivatable permanent magnet (2.9) is disposed in a separate detachable housing (2.2).

3. The valve according to claim 1 or 2, **characterized in that** the piston rod (2.3) of the double piston is magnetizable or that a magnetizable disc (2.8) or another magnetizable element is disposed between the piston rod (2.3) and the permanent magnet (2.9).

4. The valve according to one of claims 1 to 3, **characterized in that** the electrically deactivatable permanent magnet (2.9) is connected to a detector (3) or a control device (7) by means of a cable (4).

5. The valve according to claim 4, **characterized in that** the detector is an energy self-sufficient detector (3) and the control device (7) is a fire-detection panel and/or extinguishing control panel.

6. The valve according to one of claims 1 to 5, **characterized in that** the pistons (2.3.1) of the double piston have the same dimensions, so that the forces on the pistons (2.3.1) are cancelled out by the operating pressure of the fluid medium in a pressure chamber (2.15).

7. The valve according to one of claims 1 to 6, **characterized in that** a longitudinal bore (2.13) is disposed in the piston rod (2.3) of the double piston for reducing leak pressure.

## Revendications

1. Vanne de commande d'un fluide pressurisé, comprenant un boîtier (2.1) muni d'un raccord d'entrée du fluide (2.10) et d'un raccord de sortie du fluide (2.11), les raccords d'entrée et de sortie du fluide (2.10, 2.11) étant reliés entre eux, **caractérisée en ce qu'**un aimant permanent (2.9) désactivable électriquement maintient la vanne (2) fermée à l'état de veille par un double piston à tige (2.3) s'opposant à la force d'un ressort (2.4) jusqu'à ce qu'un signal électrique désactive l'aimant permanent (2.9), le double piston adhérant à l'état de veille à l'aimant permanent (2.9) désactivable électriquement.

2. Vanne selon la revendication 1, **caractérisée en ce que** l'aimant permanent (2.9) désactivable électriquement est disposé dans un boîtier détachable séparé (2.2).

3. Vanne selon la revendication 1 ou 2, **caractérisée en ce que** la tige (2.3) du double piston est magnétisable ou qu'entre la tige (2.3) et l'aimant permanent (2.9) est disposé un disque magnétisable (2.8) ou un autre élément magnétisable.

4. Vanne selon l'une quelconque des revendications 1 à 3, **caractérisée en ce que** l'aimant permanent (2.9) désactivable électriquement est relié par câble (4) à un détecteur (3) ou un dispositif de commande (7).

5. Vanne selon la revendication 4, **caractérisée en ce que** le détecteur constitue un détecteur (3) auto-suffisant en énergie et le dispositif de commande (7) constitue une centrale d'alarme et/ou d'extinction incendie.

6. Vanne selon l'une quelconque des revendications 1 à 5, **caractérisée en ce que** les pistons (2.3.1) du double piston ont les mêmes dimensions, si bien que les forces exercées sur les pistons (2.3.1) se compensent sous l'effet de la pression de service du fluide dans une chambre à pression (2.15).

7. Vanne selon l'une quelconque des revendications 1 à 6, **caractérisée en ce qu'**un trou longitudinal (2.13) est disposé dans la tige (2.3) du double piston afin de réduire la pression de fuite.
